# EUROPEAN PATENT APPLICATION

(11) **EP 3 771 344 A1**
(43) Date of publication of application: **03.02.2021**
(21) Application number: 19189861.8
(22) Date of filing: 02.08.2019
(51) Int. Cl.: A23L 7/109

(54) **DRIED CEREAL PASTA COMPRISING VEGETABLE PARTICLES**

(71) Applicant: Unilever N.V., 3013 AL Rotterdam (NL)
(72) Inventor: VAN DER HIJDEN, Hendrikus Theodorus W M, Vlaardingen, 3133 AT (NL)
(74) Representative: Tjon, Hon Kong Guno

(57) **Abstract**

The invention relates to a dried cereal pasta comprising vegetable particles embedded in a starch-gluten matrix, said dried cereal pasta having a water content of 3 to 18 wt.% and comprising, calculated on a dry basis:
a) 20 to 50 wt.% of vegetable particles having a particle size of 50 to 700 micrometer, said vegetable particles being obtained by size reduction of a non-starchy vegetable;
b) 30 to 60 wt.% of wheat flour;
c) 0 to 25 wt.% of egg component selected from egg, egg yolk and combinations thereof;
wherein the combination of the vegetable particles, the wheat flour and the egg component constitutes at least 80 wt.% of the dried cereal pasta; and wherein the vegetable particles and the wheat flour are present in a weight ratio, calculated on a dry basis, of not more than 1:1.

The invention also provides a method for the preparation of dried cereal pasta containing, calculated on a dry basis, 20 to 50 wt.% of the vegetable particles and 30 to 60 wt.% wheat flour.

## Description

### Field of the invention

The present invention relates to a dried cereal pasta comprising a high amount of vegetable particles, as well as to a method of producing such a dried cereal pasta.

### Background of the invention

Pasta is a type of food typically made from an unleavened dough of durum wheat flour (semolina) mixed with water or eggs, and formed into sheets or various shapes.

Pastas are divided into two broad categories: dried and fresh. Both dried and fresh pastas come in a number of shapes and varieties, with 310 specific forms known by over 1300 documented names. Well-known types of pasta include spaghetti, tagliatelle, fettuccine, penne, pappardelle and lasagne.

Today, most pasta is manufactured by continuous, high capacity extruders, which operate on the auger extrusion principle in which kneading and extrusion are performed in a single operation.

Dried pasta products are produced by mixing milled wheat, water and optional ingredients such as eggs and salt. These ingredients are typically added to a continuous, high capacity auger extruder, which can be equipped with a variety of dies that determine the shape of the pasta. The pasta is then dried and packaged for market.

Pasta manufacturers typically use milled durum wheat (semolina, durum granulars, and durum flour) in pasta production, although farina and flour from common wheat are occasionally used. Most pasta manufacturers prefer semolina, which consists of fine particles of uniform size and produces the highest quality pasta product. Eggs (fresh eggs, frozen eggs, dry eggs, egg yolks, or dried egg solids) are added to pasta to improve the nutritional quality and richness of the pasta. Small amounts of optional ingredients, such as salt, celery, garlic, and bay leafs, may also be added to pasta to enhance flavour. It is further known to use spinach powder (appr. 2 wt.%) or tomato powder (appr. 4 wt.%) as an ingredient in pasta making, primarily to give colour to the finished product.

Silva et al. (High amounts of broccoli in pasta-like products: nutritional evaluation and sensory acceptability, Food Funct., 2013, 4, 1700-1708) describe a study in which pasta and noodles were enriched with concentrations of broccoli powder (BP) up to 30% (v/v) and the amounts of nutrients retained within the product were determined. As a representative of nutrients glucosinolates (GLs) were chosen. It was found that glucosinolates present in the pasta and noodles increased linearly with the volume fraction of BP up to 20%. At 30% BP the retained amount of GLs was equal to that of 20% BP and did not increase further. The authors conclude that the nutritional function of their pasta-like products can be improved by enrichment up to 20% broccoli.

Jalgaonkar et al. (Influence of incorporating defatted soy flour, carrot powder, mango peel powder, and moringa leaves powder on quality characteristics of wheat semolina-pearl millet pasta, J Food Process Preserv. 2018;42:e13575.) describe a study in which In which defatted soy flour (DSF) (5%, 15%, 25%), mango peel powder (MPP) (5%, 10%, 15%), carrot powder (CP) (5%, 10%, 15%) and moringa leaves powder (MLP) (3%,5%, 8%) was incorporated into wheat semolina and pearl millet flour pasta. Substitution of DSF, MPP, CP and MLP up to 15%, 10%, 5% and 3%, respectively, yielded acceptable pasta with overall improved nutritional characteristics.

US 5,211,977 describes process for preparing a flavoured pasta comprising:
- mixing a ground starchy product, a starch, an emulsifier, a gelling agent, a flavouring agent and softened water to prepare a mixture,
- extrusion cooking and extruding
- the mixture to prepare an extrusion-cooked, shaped pasta,
- contacting the cooked, shaped pasta with an aqueous calcium solution to obtain a calcium-treated pasta and
- drying the treated pasta to obtain a dried in dehydrated form.

The examples of the US patent describe a flavouring agent comprising a mixture of garlic, onion, ginger, coriander, pepper, turmeric, cardamom and cumin powders.

US 5,508,053 describes a method of preparing vegetable or herb pasta containing 4-15 wt.% vegetable solids or 2-15 wt.% herb solids, said method comprising blending flour, vegetable or herb solids, and water to form a homogenous paste; extruding the homogenous paste to form pasta-shaped extrudates; and drying the pasta-shaped extrudates.

JP60-126043A describes a pasta formed by mixing an additive consisting of one or more materials selected from fruits, potatoes, algae, beans, seeds and nuts, fish and shellfish, meats or seasonings and spices with wheat flour, the additive being applied in a concentration of 0.01 to 30% of the solid content.

WO 2018/015977 describes a food pasta, comprising:
a) a mixture of durum wheat semolina flours consisting of re-ground durum wheat semolina flour durum wheat semolina flour;
b) at least one vegetable in a quantity of 25% to 50% in weight, with reference to the total weight of the dough a)+b).

This food pasta is prepared by mixing the durum wheat semolina flours with puree of vegetable(s).

The nutritional value of pasta is relatively low due to the fact that it hardly contains dietary fibre, vitamins or nutritionally desirable phytochemicals such as polyphenols, flavonoids, carotenoids etc. Another drawback of pasta is the very high digestible carbohydrate content.

### Summary of the invention

The inventors have developed a dried cereal pasta that provides substantially more nutritional value than ordinary dried cereal pasta, that is robust and does not fracture easily, and that can suitably be used in the preparation of ordinary pasta dishes.

The dried cereal pasta of the present invention contains a high amount of vegetable particles. Due to the incorporation of these vegetable particles, the dried cereal pasta of the present invention contains more dietary fibre and less starch than ordinary dried cereal pasta. In addition, the vegetable particles introduce nutritionally valuable components such as vitamins, minerals, polyphenols, flavonoids and carotenoids.

The inventors have unexpectedly discovered that it is possible to incorporate a high amount of vegetable particles in dried cereal pasta without adversely affecting the structural integrity of the pasta pieces if the bulk of the vegetable particles has a particle size in the range of 50 to 700 micrometer and if the pasta contains wheat flour and vegetable particles in a weight ratio, calculated on a dry basis, of at least 1:1.

Accordingly, the present invention provides a dried cereal pasta comprising vegetable particles embedded in a starch-gluten matrix, said dried cereal pasta having a water content of 3 to 18 wt.% and comprising, calculated on a dry basis:
a) 20 to 50 wt.% of vegetable particles having a particle size of 50 to 700 micrometer, said vegetable particles being obtained by size reduction of a non-starchy vegetable;
b) 30 to 60 wt.% of wheat flour;
c) 0 to 25 wt.% of egg component selected from egg, egg yolk and combinations thereof;
wherein the combination of the vegetable particles, the wheat flour and the egg component constitutes at least 80 wt.% of the dried cereal pasta;
wherein the vegetable particles and the wheat flour are present in a weight ratio, calculated on a dry basis, of not more than 1:1.

The dried cereal pasta of the present invention can be produced by incorporating a vegetable powder or a vegetable puree into the pasta dough, followed by shaping the dough and drying the shaped dough.

Thus, the invention further provides a method of preparing a dried cereal pasta, said method comprising:
- providing a wheat flour having a mass weighted average particle size in the range of 80 to 700 micrometer;
- providing a vegetable material in the form of a vegetable powder or a suspension comprising vegetable particles, said vegetable particles having a mass weighted average particle size in the range of 80 to 700 micrometer, said vegetable material being obtained by size reduction of a non-starchy vegetable;
- mixing the wheat flour with the vegetable material and optionally aqueous liquid to produce a dough, wherein the vegetable material and the wheat flour are applied in a weight ratio, calculated on dry weigh basis, of not more than 1:1;
- shaping the dough to produce a wet cereal pasta; and
- drying the wet cereal pasta to produce a dried cereal pasta;
wherein the dried cereal pasta contains, calculated on a dry basis, 20 to 50 wt.% of the vegetable particles and 30 to 60 wt.% of wheat flour.

### Description of the invention

Accordingly, a first aspect of the invention relates to a dried cereal pasta comprising vegetable particles embedded in a starch-gluten matrix, said dried cereal pasta having a water content of 3 to 15 wt.% and comprising, calculated on a dry basis:
a) 20 to 50 wt.% of vegetable particles having a particle size of 50 to 700 micrometer, said vegetable particles being obtained by size reduction of a non-starchy vegetable;
b) 30 to 60 wt.% of wheat flour;
c) 0 to 25 wt.% of egg component selected from whole egg, egg yolk and combinations thereof;
wherein the combination of the vegetable particles, the wheat flour and the egg component constitutes at least 80 wt.% of the dried cereal pasta;
wherein the vegetable particles and the wheat flour are present in a weight ratio, calculated on a dry basis, of not more than 1:1.

These and other aspects, features and advantages will become apparent to those of ordinary skill in the art from a reading of the following detailed description and the appended claims. For the avoidance of doubt, any feature of one aspect of the present invention may be utilised in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Ratio's are weight/weight, unless indicated otherwise. Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

Throughout this specification and the claims which follow, unless the context requires otherwise, the word "comprise", and variations such as "comprises" or "comprising", will be understood to imply the inclusion of a stated integer or step or group of integers or steps but not the exclusion of any other integer or step or group of integers or steps. The reference in this specification to any prior publication (or information derived from it), or to any matter which is known, is not, and should not be taken as an acknowledgement or admission or any form of suggestion that that prior publication (or information derived from it) or known matter forms part of the common general knowledge in the field of endeavour to which this specification relates.

Whenever reference is made to a concentration that is calculated on a dry basis, what is meant is that the presence of water is ignored in the calculation of the concentration.

The term "non-starchy vegetable" refers to vegetables that contain less than 15% starch by weight of dry matter. Thus, ordinary potatoes, peas, beans and lentils are not encompassed by the term "non-starchy vegetable.

The term "vegetable particle" as used herein refers to particle of vegetable material that has been obtained from a vegetable by size reduction (e.g. by chopping, milling or pureeing).

The term "particle size" as used herein in relation to a powder, refers to the mesh size of a particle as determined with the help of sieves. The particles size distribution of the vegetable particles or the wheat flour can suitably be determined by methods well-known in the art, using a set of sieves with different mesh sizes. The term "particle size" as used herein in relation to a suspension (e.g. a puree), refers to the particles size as determined with the help of laser diffraction. Laser diffraction can also suitably be used to determine the particle size distribution within a suspension.

The term "vegetable pomace" as used herein refers to the solid material that remains of vegetables after pressing for juice.

The dried cereal paste of the present invention preferably has a water content of 5 to 14 wt.%, more preferably of 7 to 13.5 wt.% and most preferably of 9 to 13 wt.%.

According to a particularly preferred embodiment, the vegetable particles are homogeneously distributed throughout the dried cereal pasta.

The dried cereal pasta preferably contains, calculated on a dry basis, 25 to 45 wt.%, more preferably 28 to 42 wt.% of the vegetable particles.

The vegetable particles employed in the dried cereal pasta of the present invention may be obtained from various non-starchy vegetables. Preferably, the vegetable particles are obtained from a vegetable containing 0-10 %, more preferably 0-5% starch by weight of dry matter.

According to a particularly preferred embodiment, the vegetable particles are particles of a vegetable selected from spinach, kale, zucchini, cauliflower, tomato, bell pepper, beet root, carrot, pumpkin and combinations thereof. Even more preferably, the vegetable particles are particles of a vegetable selected from tomato, beet root, carrot, pumpkin and combinations thereof.

The vegetable particles in the dried cereal pasta preferably exclusively consist of vegetable material obtained from a non-starchy vegetable.

The inventors have found that vegetable pomace can advantageously be used as a source of vegetable particles. Vegetable pomace is usually discarded or used as animal feed. However, vegetable pomace is rich in dietary fibre and micronutrients. Use of vegetable pomace in the production of the dried cereal pasta of the present invention is economic alternative to the use of dried vegetable powder or vegetable puree. Preferably, the vegetable particles in the dried cereal pasta contain, calculated on a dry basis, at least 80 wt.%, more preferably at least 90 wt.% and most preferably 100 wt.% vegetable pomace.

The vegetable particles preferably are composed of a single piece of plant tissue, as opposed to a particle that is an agglomerate of different particles. Preferably, said single piece of plant tissue has retained its original cellular organisation.

The vegetable particles in the dried cereal pasta preferably have a mass weighted average particle size in the range of 100 to 400 micrometer, more preferably in the range of 130 to 350 micrometer and most preferably in the range of 150 to 300 micrometer.

The dried cereal pasta preferably contains, calculated on a dry basis, 32 to 58 wt.%, more preferably 35 to 55 wt.% of wheat flour.

The wheat flour employed in accordance with the present invention preferably contains durum wheat flour. More preferably, at least 50 wt.% of the wheat flour, even more preferably at least 80 wt.% of the wheat flour and most preferably at least 90 wt.% of the wheat flour in the dried cereal pasta is durum wheat flour. Here the term "durum wheat flour" also encompasses semolina.

The benefits of the present invention are particularly apparent in thin pasta in the shape of sheets or ribbons. Accordingly, in a preferred embodiment, the pasta has a thickness of 0.5 to 2 mm, more preferably of 0.6 to1.5 mm and most preferably of 0.7 to 1.3 mm. The pasta in the shape of ribbons or sheets preferably has a width of at least 5 mm and a length of at least 6 cm, more preferably a width of at least 8 mm and a length of at least 8 cm.

According to a particularly preferred embodiment, the dried cereal pasta of the present invention is lasagne. Preferably, the lasagne has a thickness of 0.6 to 1.2 mm, a width of 6 to 15 cm and a length of 8 to 22 cm.

Besides wheat flour and the vegetable particles, the dried cereal pasta may suitably contain further ingredients, such as whole egg, egg yolk, salt, spices, herbs and gluten.

Preferably, the combination of the vegetable particles, the wheat flour and the egg component constitutes at least 90 wt.%, more preferably at least 95 wt.% of the dried cereal pasta.

In another preferred embodiment, the combination of the vegetable particles and the wheat flour constitutes at least 80 wt.%, more preferably at least 85 wt.% and most preferably at least 90 wt.% of the dried cereal pasta.

Another aspect of the invention relates to a method of preparing a dried cereal pasta, said method comprising:
- providing a wheat flour having a mass weighted average particle size in the range of 80 to 700 micrometer;
- providing a vegetable material in the form of a vegetable powder or a suspension comprising vegetable particles, said vegetable particles having a mass weighted average particle size in the range of 80 to 700 micrometer, said vegetable material being obtained by size reduction of a non-starchy vegetable;
- mixing the wheat flour with the vegetable material and optionally aqueous liquid to produce a dough, wherein the vegetable material and the wheat flour are applied in a weight ratio, calculated on dry weigh basis, of not more than 1:1;
- shaping the dough to produce a wet cereal pasta; and
- drying the wet cereal pasta to produce a dried cereal pasta;
wherein the dried cereal pasta contains, calculated on a dry basis, 20 to 50 wt.% of the vegetable particles and 30 to 60 wt.% of wheat flour.

Here the term "aqueous liquid" refers to an aqueous liquid that does not contain vegetable material obtained by size reduction of a non-starchy vegetable. Examples of aqueous liquids that may be employed in the present method include water, whole egg, egg yolk and combinations thereof.

Preferably, the preparation method of the present invention yields a dried cereal pasta as described herein before.

As explained above, vegetable pomace may suitably be used as part of the vegetable material in the production of the dried cereal pasta. Vegetable pomace offers the advantage that it has a very high content of dietary fibre and low content of sugars. Accordingly, in a preferred embodiment, the vegetable material contains, calculated on a dry basis, at least 80 wt.%, more preferably at least 90 wt.% and most preferably 100 wt.% vegetable pomace.

The vegetable pomace used in accordance with the present invention preferably contains, calculated on dry weigh bases, less than 20 wt.% sugars, more preferably less than 10 wt.% sugars and most preferably less than 8 wt.% sugars. Here the term sugar refers to saccharides selected from monosaccharides, disaccharides and combinations thereof.

The vegetable pomace is preferably obtained from one or more vegetables selected from spinach, kale, tomato, beet root, carrot and pumpkin. Most preferably, the vegetable pomace is obtained from one or more vegetables selected from tomato, beet root, carrot and pumpkin.

In one embodiment of the present invention, the vegetable material is a vegetable powder having a water content of less than 20 wt.%, preferably of less than 18 wt.% and most preferably of less than 15 wt.%. The vegetable powder may be obtained, for instance, by drying of vegetable pomace of vegetable pieces, optionally followed by milling of the dried vegetable material.

In another embodiment, the vegetable material is a suspension. Such a suspension by be prepared by dispersing vegetable powder in aqueous liquid or by pureeing non-starch vegetables. According to a preferred embodiment, the suspension has a water content of at least 40 wt.%, more preferably of 50-75 wt.%.

Most preferably, the vegetable material employed in the present method is a vegetable powder.

The particulate vegetable material that is applied in the present method preferably have a mass weighted average particle size in the range of 100 to 600 micrometer, more preferably in the range of 120 to 500 micrometer and most preferably in the range of 150 to 350 micrometer.

The present method preferably does not comprise the use of very coarse or find particulate vegetable material. Accordingly, in a very preferred embodiment, at least 90 wt.% of the particulate vegetable material has a particle size in the range of 50 to 700 micrometer, more preferably in the range of 80 to 500 micrometer, most preferably of 90 to 400 micrometer.

The particulate vegetable material is preferably obtained by size reduction of a non-starchy vegetable that contains 0-15 %, more preferably 0-10% and most preferably 0-5% starch by weight of dry matter.

The inventors have found that particularly good results are achieved if the particle size distributions of the wheat flour and the particulate vegetable material as similar. Accordingly, in a preferred embodiment, the mass weighted average particle size of the wheat flour and the mass weighted average particle size of the particulate vegetable material differ by not more than 50%.

According to a particularly preferred embodiment, the vegetable material is obtained by size reduction of a non-starchy vegetable selected from spinach, kale, zucchini, cauliflower, tomato, bell pepper, beet root, carrot, pumpkin and combinations thereof. Even more preferably, the particulate vegetable material is obtained by size reduction of a non-starchy vegetable selected from tomato, beet root, carrot, pumpkin and combinations thereof.

The vegetable material used in the present method preferably is composed of particles that consist of a single piece of plant tissue. Preferably, said piece of plant tissue has retained a cellular organisation.

The wheat flour that is applied in the present method preferably have a mass weighted average particle size in the range of 90 to 600 micrometer, more preferably in the range of 100 to 500 micrometer and most preferably in the range of 110 to 400 micrometer.

The aqueous liquid employed in the present method preferably has a water content of 50-100 wt.%, more preferably of 60 to 100 wt.% and most preferably of 70 to 100 wt.%.

The dough that is produced in the present method typically has a water content of 20 to 55 wt.%. In case the vegetable material used in the present method is composed of particles of whole, optionally dried vegetables, the dough preferably has a water content of 24 to 40 wt.% and most preferably of 26 to 38 wt.%. In case the vegetable material used in the present method is composed of, optionally dried, vegetable pomace the water content of the dough should be relatively high in order to produce a dough of suitable quality. Accordingly, in case the vegetable material is, optionally dried, vegetable pomace, the dough preferably has a water content of 40 to 60 wt.%, most preferably of 45 to 58 wt.%.

Expressed differently, in case the vegetable material is, optionally dried, vegetable pomace, the dough is prepared by employing in total 120 to 250 wt.% water, calculated by weight of the wheat flour. Here the percentage of water employed includes all the water that is contained in the ingredients used in the preparation of the dough. More preferably, the pomace containing dough is prepared by employing 140 to 240 wt.% water, calculated by weight of the wheat flour. Most preferably, the pomace containing dough is prepared by employing 160 to 220 wt.% water, calculated by weight of the wheat flour.

The production of the wet cereal pasta by shaping is preferably achieved by means of extrusion. The extrusion auger not only forces the dough through the die, but it also kneads the dough into a homogeneous mass, controls the rate of production, and influences the overall quality of the finished product. The extrusion barrels are typically equipped with a water cooling jacket to dissipate the heat generated during the extrusion process. The cooling jacket also helps to maintain a constant extrusion temperature. Preferably, extrusion temperature is in the range of 30 to 80 °C, more preferably in the range of 40 to 60 °C.

The objective of the drying step is to lower the moisture content of the wet pasta to 15 wt.% or less, so that the finished product will be hard, retain its shape, and store without spoiling. Drying temperature and relative humidity increments are important factors in drying. Since the outside surface of the pasta dries more rapidly than the inside, moisture gradients develop across the surface to the interior of the pasta. If dried too quickly, the pasta will crack, giving the product a poor appearance and very low mechanical strength. If the pasta is dried too slowly, it tends to spoil or become mouldy during the drying process. If the drying cycle has been successful, the pasta will be firm but also flexible enough so that it can bend to a considerable degree before breaking.

The invention is further illustrated by the following non-limiting examples. It will be clear to the skilled person how to carry out the invention by using equivalent means without departing from the invention.

### Examples

### Example 1

A dried lasagne according to the present invention was prepared on the basis of the recipe that is shown in Table 1.

**Table 1**

| Ingredient | Wt.% |
|---|---|
| Durum wheat flour | 30.2 |
| Cauliflower powder | 30.2 |
| Whole egg | 39.3 |
| Salt | 0.3 |

A lasagna dough was prepared in a Hobart mixer according to the following procedure:
- Mix salt with durum wheat flour and vegetable powder and add to bowl of the Hobart Mixer
- Mix the eggs in a separate container
- Mix the flour, vegetable powder and salt at setting 1 using a K blade for 115 min
- Add the mixed egg slowly (over 1 minute), and mix for an additional 30 sec
- Replace the K blade with dough hook
- Restart mixer at setting 1 and knead with the dough hook for 15 minutes
- When finished -knead dough manually to a ball and wrap in foil
- Leave at least 60 minutes before further processing it into sheets

Next, the lasagna dough was processed to form dried lasagna sheets, using the following procedure:
a) Flour the benchtop
b) Use pin roller to make initial dough sheet of ±1 cm thick and about 10 cm wide of about 100g
c) Add additional flour if sheet is too sticky (must prevent sticking to metal rollers)
d) Feed dough sheet twice through widest setting (9) of lasagna sheet machine
e) Select next smaller setting and repeat process until smallest setting (1)
f) Cut sheets with roller tool to 10x10 cm
g) Dry the sheets in an oven at 70°C for 6hrs to an A_{w} of 0.42

The dried lasagna sheets so obtained had a water content of 6 wt.% and a composition, calculated on a dry basis, as shown in Table 2.

**Table 1**

| **Ingredient** | **Wt.%** |
|---|---|
| Durum wheat flour | 42.8 |
| Cauliflower powder | 38.1 |
| Whole egg | 18.6 |
| Salt | 0.5 |

The dried lasagne sheets were found to be robust and sufficiently flexible to prevent unwanted fracturing.

### Example 2

Yellow coloured dried lasagnas were prepared on the basis of the recipes that are shown in Table 3.

**Table 3**

| **Ingredient** | **Wt.%** | |
|---|---|---|
| | **2.1** | **2.2** |
| "00" wheat flour | 29.7 | -- |
| Semolina | 7.0 | 44.6 |
| Egg yolk | 18.2 | -- |
| Pumpkin powder ¹ | 29.7 | 28.5 |
| Water | 15.4 | 26.8 |

| | | |
|---|---|---|
| ¹ 8.8 wt.% dietary fibre, 15.9 wt.% protein, 53.5 carbs (including 42.6 wt.% sugars), 2.3 wt.% fat, 5.7 wt.% water; >95 wt.% < 250 µm. | | |

The dried lasagnas were prepared in the same way as described in Example 1, except that the cut sheets were dried by keeping them in refrigerator at 5°C and RH 70-80 % for 60 hours.

The dried lasagne sheets were found to be robust and sufficiently flexible to prevent unwanted fracturing.

The lasagne sheets were cooked in boiling water and were removed from the boiling water after 3 and 10 minutes. After 3 and 10 minutes of cooking both lasagne sheets 2.1 and 2.2 could be removed from the boiling water undamaged.

### Example 3

Red coloured dried lasagnas were prepared on the basis of the recipes that are shown in Table 4.

**Table 4**

| **Ingredient** | **Wt.%** | |
|---|---|---|
| | **3.1** | **3.2** |
| "00" wheat flour | 28.7 | -- |
| Semolina | 10.1 | 45.5 |
| Egg yolk | 17.6 | -- |
| Tomato powder¹ | 28.7 | 28.1 |
| Water | 14.9 | 26.4 |

| | | |
|---|---|---|
| ¹ 16.5 wt.% dietary fibre, 12.9 wt.% protein, 58.2 carbs (including 43.9 wt.% sugars), 0.4 wt.% fat, 3.1 wt.% water; >98 wt.% < 500 µm, 20-50 wt.% < 125 µm. | | |

The dried lasagnas were prepared in the same way as in Example 2.

The dried lasagne sheets so obtained were found to be robust and sufficiently flexible to prevent unwanted fracturing.

The lasagne sheets were cooked in boiling water and were removed from the boiling water after 3 and 10 minutes. After 3 minutes of cooking both lasagne sheets 3.1 and 3.2 could be removed from the boiling water undamaged. After 10 minutes of cooking sheet 3.1 could still be removed undamaged, whereas sheet 3.2 showed tearing when it was removed.

### Example 4

A purple coloured dried lasagna was prepared on the basis of the recipe that is shown in Table 5.

**Table 5**

| **Ingredient** | **Wt.%** |
|---|---|
| "00" wheat flour | 17.4 |
| Semolina | 6.1 |
| Egg yolk | 16.0 |
| Beet pomace powder ¹ | 17.4 |
| Water | 43.0 |

| | |
|---|---|
| ¹ <60 wt.% fibres (including <50 wt.% insoluble fibres), <19 wt.% protein, <7.6 wt.% carbs (including <3.5 wt.% sugars), < 1.4 wt.% fat, appr. 6 wt.% water) | |

The dried lasagna was prepared in the same way as in Example 2.

The dried lasagne sheets so obtained were found to be robust and sufficiently flexible to prevent unwanted fracturing.

The lasagne sheets were cooked in boiling water and were removed from the boiling water after 3 and 10 minutes. After both 3 and 10 minutes of cooking the lasagne sheets could be removed from the boiling water undamaged.

## Claims

1. A dried cereal pasta comprising vegetable particles embedded in a starch-gluten matrix, said dried cereal pasta having a water content of 3 to 18 wt.% and comprising, calculated on a dry basis:
a) 20 to 50 wt.% of vegetable particles having a particle size of 50 to 700 micrometer, said vegetable particles being obtained by size reduction of a non-starchy vegetable;
b) 30 to 60 wt.% of wheat flour;
c) 0 to 25 wt.% of egg component selected from whole egg, egg yolk and combinations thereof;
wherein the combination of the vegetable particles, the wheat flour and the egg component constitutes at least 80 wt.% of the dried cereal pasta;
wherein the vegetable particles and the wheat flour are present in a weight ratio, calculated on a dry basis, of not more than 1:1.

2. Dried cereal pasta according to claim 1 wherein the vegetable particles are particles of a vegetable selected from spinach, kale, zucchini, cauliflower, tomato, bell pepper, beet root, carrot, pumpkin and combinations thereof.

3. Dried cereal pasta according to claim 1 or 2, wherein the vegetable particles contain at least 80 wt.% vegetable pomace, calculated on a dry basis.

4. Dried cereal pasta according to any one of the preceding claims, wherein at least 50 wt.% of the wheat flour is durum wheat flour.

5. Dried cereal pasta according to any one of the preceding claims, wherein the vegetable particles have a mass weighted average particle size in the range of 100 to 400 micrometer.

6. Dried cereal pasta according to any one of the preceding claims, wherein the pasta is shaped in the form of ribbons or sheets, and has a thickness of 0.5 to 2 mm.

7. Dried cereal pasta according to claim 6, wherein the pasta has a width of at least 5 mm and a length of at least 6 cm.

8. Dried cereal pasta according to any one of the preceding claims, wherein the pasta is lasagne.

9. A method of preparing a dried cereal pasta, said method comprising:
• providing a wheat flour having a mass weighted average particle size in the range of 80 to 700 micrometer;
• providing a vegetable material in the form of a vegetable powder or a suspension comprising vegetable particles, said vegetable particles having a mass weighted average particle size in the range of 80 to 700 micrometer, said vegetable material being obtained by size reduction of a non-starchy vegetable;
• mixing the wheat flour with the vegetable material and optionally aqueous liquid to produce a dough, wherein the vegetable material and the wheat flour are applied in a weight ratio, calculated on dry weigh basis, of not more than 1:1;
• shaping the dough to produce a wet cereal pasta; and
• drying the wet cereal pasta to produce a dried cereal pasta;
wherein the dried cereal pasta contains, calculated on a dry basis, 20 to 50 wt.% of the vegetable particles and 30 to 60 wt.% of wheat flour.

10. Method according to claim 10, wherein the vegetable material is a vegetable powder having a water content of less than 20 wt.%.

11. Method according to claim 9 or 10, wherein the vegetable material contains, calculated on a dry basis, at least 80 wt.% vegetable pomace

12. Method according to claim 9, wherein the vegetable material is a suspension having a water content of at least 40 wt.%.

13. Method according to any one claims 9-12, wherein at least 90 wt.% of the vegetable particles has a particle size in the range of 50 to 700 micrometer.

14. Method according to any one of claims 9-13, wherein the vegetable material is obtained from vegetable selected from spinach, kale, zucchini, cauliflower, tomato, bell pepper, beet root, carrot, pumpkin and combinations thereof.

15. Method according to any one of claims 10-14, wherein the wet cereal pasta is produced by extrusion.
